# EUROPEAN PATENT SPECIFICATION

(11) **EP 3 975 388 B1**
(45) Date of publication and mention of the grant of the patent: **10.04.2024**
(21) Application number: 19929390.3
(22) Date of filing: 27.12.2019
(51) Int. Cl.: F16C 32/04, H02K 3/28, H02K 7/09, H02K 15/10, H02K 3/52

(54) **MAGNETIC LEVITATION BEARING, STATOR, WINDING AND MANUFACTURING METHOD THEREFOR, MOTOR, AND COMPRESSOR**
MAGNETSCHWEBELAGER, STATOR, WICKLUNG UND HERSTELLUNGSVERFAHREN DAFÜR, MOTOR UND VERDICHTER
PALIER À LÉVITATION MAGNÉTIQUE, STATOR, ENROULEMENT ET PROCÉDÉ DE FABRICATION ASSOCIÉ, MOTEUR ET COMPRESSEUR

(30) Priority: 20.05.2019 CN 201910419786
(43) Date of publication of application: 30.03.2022
(73) Proprietor: Gree Electric Appliances, Inc. of Zhuhai, Zhuhai, Guangdong 519070 (CN)
(72) Inventor: WANG, Jianhui, Zhuhai, Guangdong 519070 (CN); ZHANG, Xiaobo, Zhuhai, Guangdong 519070 (CN); ZHANG, Fang, Zhuhai, Guangdong 519070 (CN); GONG, Gao, Zhuhai, Guangdong 519070 (CN); ZHANG, Chao, Zhuhai, Guangdong 519070 (CN); LI, Xin, Zhuhai, Guangdong 519070 (CN); DENG, Mingxing, Zhuhai, Guangdong 519070 (CN); WANG, Fei, Zhuhai, Guangdong 519070 (CN); DONG, Ruhao, Zhuhai, Guangdong 519070 (CN)
(74) Representative: Hoffmann Eitle
(86) International application number: PCT/CN2019/129043
(87) International publication number: WO 2020/233123

(56) References cited:
- WO-A1-2015/045331
- CN-A- 109 058 294
- US-A1- 2016 006 311
- US-B2- 9 698 645

## Description

### Related Applications

This application claims priority to Chinese patent application No. 201910419786.3, filed on May 20, 2019, entitled "Magnetic levitation bearing, stator, winding and method of making the same, motor and compressor".

### Technical Field

The present application relates to the technical field of bearing apparatus, and in particular to a magnetic levitation bearing, stator, winding and method of making the same, motor and compressor.

### Background

Magnetic levitation bearing is a new type of support bearing that uses magnetic field force to levitate the rotor in space and realize no contact between the stator and rotor. It has a very broad application prospect in the field of high-speed rotating machinery. The stator winding of magnetic levitation bearing is the main tool for energy conversion of magnetic levitation bearing. When current is passed in the winding, the winding coil converts electric field into magnetic field, which generates electromagnetic force to levitate the rotor. The distribution of the winding has an important influence on the magnitude of the input current or voltage, as well as the generation of the magnetic field and the magnitude of the electromagnetic force.

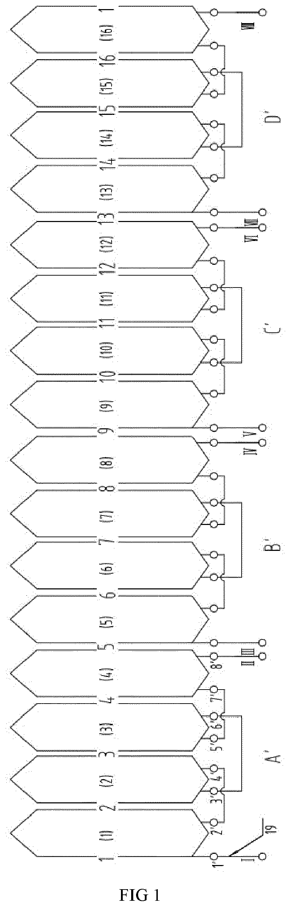

In general, the winding of a magnetic levitation bearing is one coil wound on each stator tooth. 16-pole radial magnetic levitation bearing stator contains 16 teeth, and there are four phases of stator winding, each phase of stator winding includes four winding coils with transition lines between the coils 19. As shown in Figure 1, the related technology uses one enameled wire to complete the four coils of one phase of winding, and the enameled wires are covered by three segments of insulation sleeves before starting the winding (four coils per phase of winding, three transition enameled wires between the four coils, and the transition enameled wires with the insulating sleeve), winding each coil in the order of 1-2-3-4, respectively, where the direction of coil 1 is opposite to the direction of coil 2, the direction of coil 2 is the same as the direction of coil 3, and the direction of coil 3 is opposite to the direction of coil 4. Following this pattern, the four phase coils are wound separately. Then the end of the lead wire is de-lacquered, and all the lead wire parts are set with insulating sleeves to avoid the enameled wire being exposed. In this way, the winding of the radial bearing stator is completed. However, when there is any damage to one coil in one winding, the whole phase of coils needs to be replaced, which increases the labor and material cost of coil maintenance and reduces the efficiency of maintenance, and the winding efficiency of this winding is extremely low, and the inductance in the winding coil is large, which increases the response time of the controller.

Therefore, there is a need to provide a magnetic levitation bearing, stator, winding and method of making the same, motor and compressor.

CN 109 058 294 A discloses a magnetic levitation bearing stator winding, a winding method of the magnetic levitation bearing stator winding and a magnetic levitation bearing. The magnetic levitation bearing stator winding comprises multiple phases of windings, multiple coils of each phase of winding are formed by winding and connecting varnished wires in series, and the winding direction of the first coil is opposite to that of the second coil. According to the magnetic levitation bearing stator winding, the number of outgoing lines of the magnetic levitation bearing stator winding can be reduced, the labor can be reduced, meanwhile, the wiring error occurrence rate is reduced, and the acceptability of magnetic levitation bearings is improved.

US 2016/006311 A1 discloses direct current (DC) electric motor assembly with a closed type overlap stator winding which is commutated with a timed commutating sequence that is capable of generating a stator rotating magnetic field. The coil overlap of the winding and a timed commutation sequence are such that the current in each slot of the stator is additive and when a previous magnetic pole collapses according to a commutation sequence; the energy released by that previous collapsing magnetic field is captured to strengthen the next magnetic field on the commutation sequence schedule. Electrical currents produced by the collapsing magnetic fields flow to low electric potential and add or subtract to the DC current provided by the commutator thus promoting formation of the next magnetic on commutation schedule. When used with a suitable commutator and rotor, the electric motor assembly provides a true brushless high torque speed controlled Real Direct Current (RDC) motor that operates with higher efficiency and higher power density.

### Summary

According to a first aspect of the present disclosure, there is provided a magnetic levitation bearing stator winding in accordance with claim 1.

According to a second aspect of the present disclosure, there is provided a method of making a magnetic levitation bearing stator winding in accordance with claim 8.

According to a third aspect of the present disclosure, there is provided a magnetic levitation bearing stator in accordance with claim 13.

According to a fourth aspect of the present disclosure, there is provided a magnetic levitation bearing in accordance with claim 14.

The technical solution of the present application has the following advantages over the closest prior art.

The technical solution provided by this application provides a magnetic levitation bearing stator winding, all the coils are divided into several groups, each group is a coil unit, and these coil units are connected in parallel to achieve the connection of the winding; each coil in this way is wound separately and then wired according to the design. When a coil in a phase winding is damaged, only the corresponding coil need to be replaced, avoiding the waste of labor and material resources caused by the whole phase winding replacement, therefore increasing maintenance efficiency. The wiring method between coils is more flexible, which improves the diversity and adaptability of winding methods within the winding. Compared to the way of winding the whole winding with one wire, the present invention can reduce the inductance of coils and shorten the response time of the controller, which greatly improves the ability of the magnetic levitation bearing to resist external shocks. Moreover, with the same coils and the same winding method, it reduces the difference in resistance value between each phase due to inconsistent contact resistance at each interface.

### BRIEF DESCRIPTION OF DRAWINGS

FIG. 1 is a diagram of the distribution structure of the stator winding of a magnetic levitation bearing of the prior art.
FIG. 2 is a schematic diagram of the structure of the first type of series-parallel connection of the stator winding of the magnetic levitation bearing provided by the present application.
FIG. 3 is a structural diagram of the distribution of the first type of series-parallel connection of the stator winding of the magnetic levitation bearing provided by the present application.
FIG. 4 is a structural diagram of the distribution of the second type of series-parallel connection of the stator winding of the magnetic levitation bearing provided by the present application.
FIG. 5 is a structural diagram of the distribution structure of the third type of series-parallel connection of the stator winding of the magnetic levitation bearing provided by the present application.
FIG. 6 is a schematic diagram of the structure of the series-connected terminal provided by the present application.
FIG. 7 is a schematic diagram of the structure of the parallel connection type terminal provided by the present application.
FIG. 8 is a flow chart of the method of making the stator winding provided by the present application.

Wherein, 1, 2, 3, 4, 5, 6, 7, 8, 9, 10, 11, 12, 13, 14, 15 and 16 are the sequence numbers of the 16 coils.

(1), (2), (3), (4), (5), (6), (7), (8), (9), (10), (11), (12), (13), (14), (15) and (16) are the sequence numbers of the 16 radial cores.

1', 2', 3', 4', 5', 6', 7', 8' are the sequence numbers of the 8 lead wires of the first winding.

A', B', C', D' are the sequence letters of the four-phase winding.

I -First lead wire; II -Second lead wire; 17-Radial core; 18-Insulation framework; 19-Transition section; 20-Crimp slot; 21-Introduction end; 22-Lead end.

### DETAILED DESCRIPTION OF THE EMBODIMENTS

In order to enable those in the art to better understand the present application scheme, the following will be a clear and complete description of the technical solutions in the embodiments of the present application in conjunction with the accompanying drawings in the embodiments of the present application. Obviously, the described embodiments are only a part of the embodiments of the present application, and not all of them. Based on the embodiments in this application, all other embodiments obtained by a person of ordinary skill in the art without making creative labor shall fall within the scope of protection of this application.

It should be noted that the terms "first", "second", etc. in the specification and claims of this application and the above-mentioned drawings are used to distinguish similar objects and need not be used to describe a particular order or sequence. It should be understood that the data so used is interchangeable, where appropriate, for the purposes of the embodiments of the present application described herein. In addition, the terms "includes" and "comprising", and any variations thereof, are intended to cover non-exclusive inclusion, e.g., a process, method, system, product, or apparatus comprising a series of steps or units need not be limited to those steps or units that are clearly listed, but may include other steps or units not clearly listed or inherent to those processes, methods, products, or devices.

In this application, the terms "upper," "lower," "inner," "middle," "outside", "front", "back", etc. indicate orientation or positional relationships based on the orientation or positional relationships shown in the accompanying drawings. These terms are used primarily to better describe the present application and its embodiments and are not intended to limit that the indicated device, element or component must have a particular orientation or be constructed and operated in a particular orientation.

Also, some of the above terms may be used to indicate other meanings in addition to orientation or positional relationships, for example, the term "on" may also be used in some cases to indicate a dependency or connection relationship. For those of ordinary skill in the art, the specific meaning of these terms in this application can be understood on a case-by-case basis.

In addition, the terms "set", "connect", "fix" should be understood in a broad sense. For example, "connect" may be a fixed connection, a removable connection, or an integral construction; a mechanical connection, or an electrical connection; a direct connection, or an indirect connection through an intermediate medium, or an internal connection between two devices, components, or parts. To a person of ordinary skill in the art, the specific meaning of the above terms in this application can be understood on a case-by-case basis.

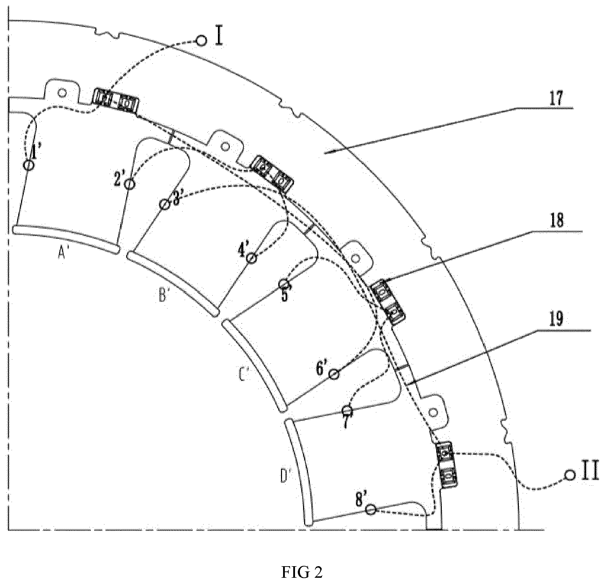

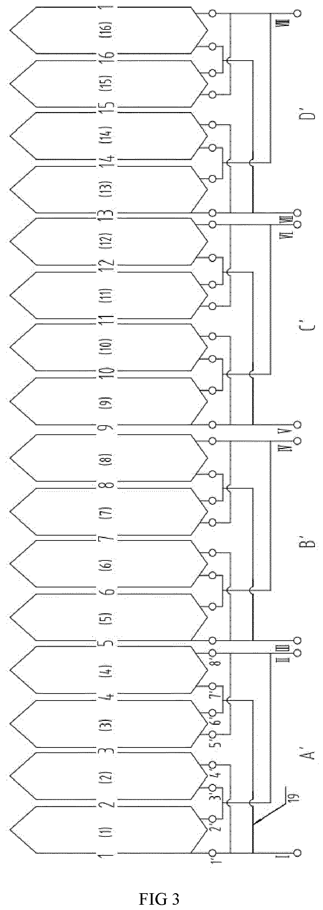

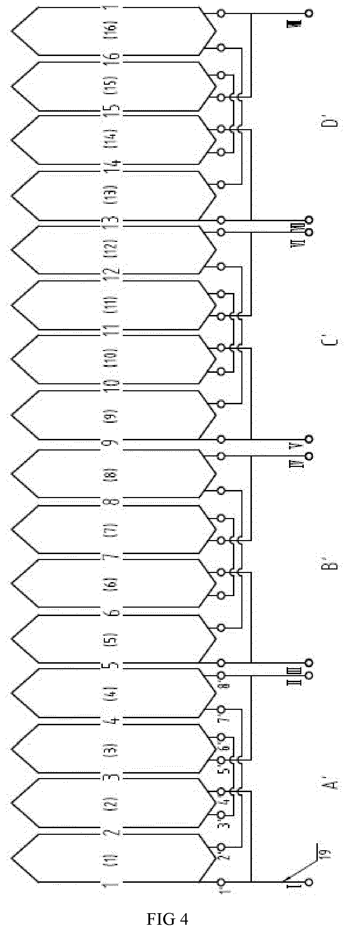

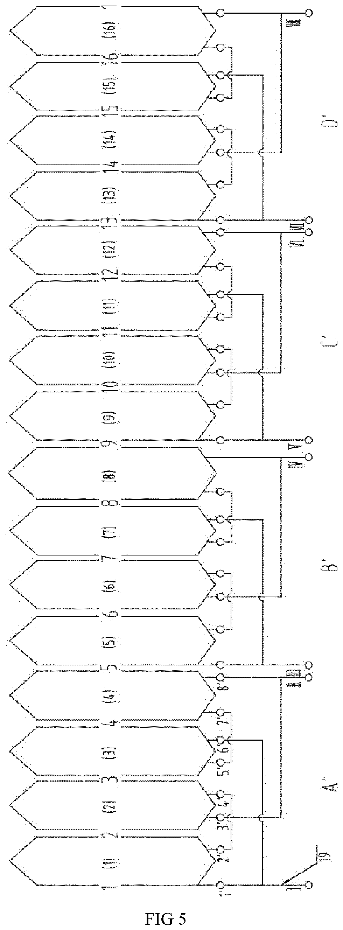

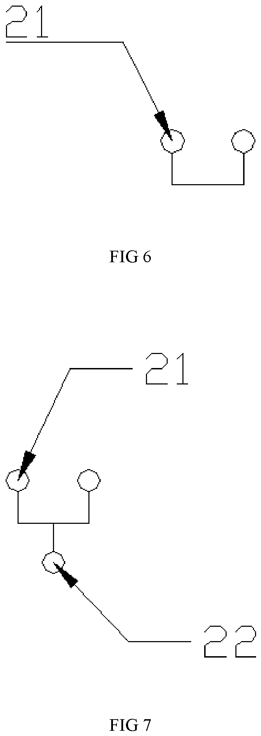

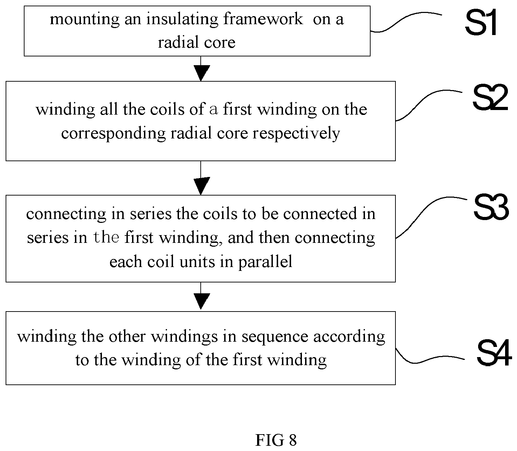

It is to be noted that the embodiments and the features in the embodiments in this application can be combined with each other without conflict. The present application will be described in detail below with reference to the accompanying FIGS. 1-8 and in conjunction with the embodiments. FIG. 1 is a diagram of the distribution structure of the stator winding of a magnetic levitation bearing of the prior art; FIG. 2 is a schematic diagram of the structure of the first type of series-parallel connection of the stator winding of the magnetic levitation bearing provided by the present application; FIG. 3 is a structural diagram of the distribution of the first type of series-parallel connection of the stator winding of the magnetic levitation bearing provided by the present application; FIG. 4 is a structural diagram of the distribution of the second type of series-parallel connection of the stator winding of the magnetic levitation bearing provided by the present application; FIG. 5 is a structural diagram of the distribution structure of the third type of series-parallel connection of the stator winding of the magnetic levitation bearing provided by the present application; FIG. 6 is a schematic diagram of the structure of the series-connected terminal provided by the present application; FIG. 7 is a schematic diagram of the structure of the parallel connection type terminal provided by the present application; FIG. 8 is a flow chart of the method of making the stator winding provided by the present application.

The present application provides a magnetic levitation bearing stator winding comprising multiple phase windings; each phase of said winding comprises at least two coil units connected in parallel with each other, the coil units comprising one or more coils.

The magnetic levitation bearing stator winding provided by the embodiments, all the coils are divided into several groups, each group is a coil unit, these coil units are connected in parallel to achieve the connection of the winding. In this way, each coil is wound separately and then wired according to the design, when a coil in a phase winding is damaged, only the corresponding coil can be replaced, avoiding the waste of human and material resources caused by the replacement of the whole phase winding In addition, the wiring method between coils is more flexible, which improves the diversity and adaptability of the winding method, and can reduce the inductance of the coils and shorten the response time of the controller compared to the way of winding the whole winding with one wire, which greatly improves the ability of the magnetic levitation bearing to resist external shocks; in addition, all coils in this application are the same and the winding method is the same. The same coil winding method makes the coils of the same length and reduces the difference in resistance value between each phase due to inconsistent contact resistance at each interface.

In one embodiment, when the coil unit comprises a plurality of coils, a plurality of said coils are connected in series to form a coil unit, and then the coil units are connected in parallel to complete the series-parallel connection of multiple coils in each phase winding. All the coils in the whole phase winding are grouped, each group is a coil unit, and so by adjusting the grouping of coils, the series-parallel connection of coils in the whole phase winding is adjusted.

In one embodiment, the series connection between the coils and the parallel connection between the coil units are connected via terminals. Wiring terminal can improve the convenience and reliability of the coil interconnection. Wiring terminals can be divided into series type wiring terminals and parallel type wiring terminals. As shown in Figure 6, series type wiring terminal generally includes two or more introduction end 21. For example, with two introduction end 21, two introduction ends 21 connect respectively with two lead wires of the coil to be connected series, realizing series connection of two coils. As shown in Figure 7, parallel type wiring terminal generally includes two or more introduction end 21, and then also includes a lead end 22, each of the multiple coils need parallel connection has a lead wire connected with an introduction end 21, realizing parallel connection of these coils, and the parallel connection of the coil unit is also the same with the parallel connection between the coils.

In one embodiment, the coils are provided with two lead wires for connection to the terminals. The lead wires are used for wiring between the coils. Since the connection between coils in this embodiment is realized through the terminals, the lead wires are used to connect to the wiring terminals, i.e. to the introduction end 21 of the terminals.

In one embodiment, each phase of said winding comprises at least four said coils. The number of the coils in the winding is selected according to the specific requirements and design.

In one embodiment, the number of coil units within the windings in each phase is the same. The same number of coil units in the windings of multiple phases facilitates not only the production in mass production, but also the uniformity of the multi-phase windings and the stability of the overall stator winding by having the same number of coil units in the multiple phase windings.

In one embodiment, the number of coils in the plurality of coil units of the same phase of the winding is the same. The same number of coils in the plurality of coil units facilitates mass production and also facilitates the stability of the whole phase winding.

The stator winding specifically provided in this embodiment includes four phase of windings, A', B', C' and D', each phase of winding includes four coils, The sixteen coils 1, 2, 3, 4, 5, 6, 7, 8, 9, 10, 11, 12, 13, 14, 15 and 16 are wound on the sixteen radial cores 17 (1), (2), (3), (4), (5), (6), (7), (8), (9), (10), (11), (12), (13), (14), (15) and (16). Each coil has two lead wires, so there are 32 lead wires in total, of which 1 ', 2', 3', 4', 5', 6', 7' and 8' for the first winding, i.e., eight lead wires of the A' winding. This embodiment provides 3 types of series-parallel connection of these sixteen coils.

As shown in Figure 3, in the first type of series-parallel connection, the series-parallel connection of the four coils in the four-phase winding is identical: four coil units are included, each coil unit includes one coil, that is, each coil forms a coil unit independently, which means that four coils are connected in parallel. For example, the four coils 1, 2, 3 and 4 in the A' winding are connected in parallel.

As shown in Figure 4, in the second type of series-parallel connection, the series-parallel connection of the four coils in the four-phase winding is identical: two coil units are included, each coil unit includes two coils, that is, each two coils are connected in series to form a coil unit, and then the two coil units are connected in parallel. Specifically the first coil is connected in series with the fourth coil to form the first coil unit, and the second coil is connected in series with the third coil to form the second coil unit. For example, with the four coils 1, 2, 3 and 4 in the A' winding, coil 1 is connected in series with coil 4 to form a coil unit. Coil 2 is connected in parallel with coil 3 to form another coil unit. Finally the two coil units are connected in parallel.

As shown in Figure 5, in the third type of series-parallel connection, the series-parallel connection of the four coils in the four-phase winding is identical: two coil units are included, each coil unit includes two coils, that is, each two coils are connected in series to form a coil unit, and then the two coil units are connected in parallel. But unlike the second series-parallel method, the first coil is connected in series with the second coil to form the first coil unit, and the third coil is connected in series with the fourth coil unit to form the second coil unit, and then the first coil unit is connected in parallel with the second coil unit. For example, with the four coils 1, 2, 3 and 4 in the A' winding, coil 1 is connected in series with coil 2 to form a coil unit. Coil 3 is connected in parallel with coil 4 to form another coil unit. Finally the two coil units are connected in parallel.

As shown in Figure 8, based on the same invention idea, this application also provides a method for making a magnetic levitation bearing stator winding, the method includes the following steps: S1: installing an insulating framework 18 on the radial core 17; S2: winding all coils of the first winding on the corresponding radial core 17; S3: connecting in series the coils to be connected in series in the first winding, and then connecting the each coil units in parallel; S4: winding the other winding sequentially according to the winding method of the first winding.

This winding method, in which the winding of the coils is carried out first and then the wiring between the coils is carried out, is well organized and each coil is wound identically, which can be done with the aid of a machine, greatly improving the efficiency and quality of the winding, and thus for the stability of the coils during operation.

In one embodiment, the winding of all coils of the first winding on the corresponding core includes: winding all coils on the corresponding position on the core in the same winding direction, and reserving enameled wires as lead wires at each end after each coil is wound; selecting one lead wire of the outermost coil on one side as the first lead wire I of the first winding, and selecting the other side of the outermost coil is selected as the second lead wire II of the first winding; the other lead wires in the first winding are respectively covered with insulating sleeves.

According to the same winding direction means all are wound in clockwise direction or counterclockwise direction. It is easy to mechanize the operation, and the length of each coil is uniform; and the first lead wire I of the first winding and the second lead wire II of the first winding are respectively selected as one of the lead wires of the outermost coil and one of the lead wires of the outermost coil on the other side, which is convenient for subsequent wiring and other electrical connections. The insulating sleeves cover respectively the lead wires other than the first lead wire I and the second lead wire II of the first winding, to avoid damage to the enameled wire used as the lead wire during the process of making the magnetic levitation bearing and during transportation.

In an embodiment, connecting in series the coils to be connected in series in the first winding comprises: selecting all coil units including at least two coils within the first winding and connecting each coils therein in turn by means of series-type terminals, and then installing the series-type terminals in the crimp slot 20 of the corresponding insulating framework 18.

In one embodiment, then connecting the each coil units in parallel includes: connecting each coil unit in the first winding with parallel type terminals, and install the parallel type terminals in the crimp slot 20 of the corresponding insulation framework 18.

The first winding includes a plurality of coil units, if a plurality of coil units include only one coil, such as the first type of series-parallel in the first embodiment, there's no need for series connection but just directly parallel connection of each coil; if each coil unit of a plurality of coil units includes coils greater than or equal to two, each coil unit need to carry out the series connection of the coils within. After the series connection, connect each coil unit in parallel. If a part of the plurality of coil units includes one coil and another part includes more than or equal to two coils, only the coils in the coil units that include two or more coils need to be connected in series, and after all the series connection work is completed, then the each coil units are connected in parallel. And series connection is connected by series type terminals, parallel connection is connected by parallel type terminals, and series type terminals and parallel type terminals are fixed in the corresponding crimp slot 20 on the insulating framework 18.

In one embodiment, after connecting the each coil units in parallel further includes that the first lead wire I and the second lead wire II of the first winding are covered by insulating sleeves respectively.

The insulating sleeves are provided on the first lead wire I of the first winding and on the second lead wire II of the first winding to avoid damage to the enameled wire used as the lead wire during the process of making the magnetic levitation bearing and during transportation.

In one embodiment, after winding the other windings sequentially according to the winding method of the first winding further comprises: tying each coil separately by tying tape, and then dipping and drying the whole stator winding in sequence. Taping each coil prevents the enameled wire from being exposed. The method of making the stator winding in this embodiment corresponds to the stator winding in Example 1, i.e., this embodiment provides the method of making the stator winding in Example 1, and since the four-phase windings A', B', C' and D' are identical, only the method of making A' is described in detail in the following steps.

The first is winding of the coils. The insulating framework 18 is installed on the radial core 17, and then start the winding of the A' phase winding. The A' phase winding includes four coils 1, 2, 3 and 4, and the four coils 1, 2, 3 and 4 are wound on the four radial cores (1), (2), (3) and (4) respectively in the clockwise (or counterclockwise) direction. The lead wire 1' of coil 1 is used as the first lead wire I , the lead wire 8' of coil 4 is used as the second lead wire II, the first lead wire I and the second lead wire II are the current input and output end of A' winding, the rest of the lead wires 2'-7' are used as the transition section. After winding the A' phase coils, the transition section 2'-7' is covered with insulating sleeves, which can avoid the transition of the enameled wire in the magnetic levitation. The enameled wire of the transition can be avoided to be damaged during the process of making and transporting the bearings.

After winding the coils, wiring is carried out, and the wiring steps for the three series-parallel methods are different.

The wiring steps for the first series-parallel method are as follows:
Connect the lead wire 1' of coil 1, the lead wire 4' of coil 2, the lead wire 6' of coil 3, and the lead wire 7' of coil 4 through parallel-type terminals, and fix the parallel type terminals in the crimp slot 20 of the insulated framework 18.

Then connect the lead wire 2' of coil 1, the lead wire 3' of coil 2, the lead wire 5' of coil 3, the lead wire 8' of coil 4 through parallel type terminals, that is, connect the lead wire 2', the lead wire 3', the lead wire 5' and the lead wire 8'with the four introduction ends 21 of the parallel type terminals respectively, and the parallel type terminals are fixed in the crimp slot 20 of the insulated framework 18, so that the coils 1 , 2, 3 and 4 are connected in parallel with each other.

The wiring steps of the second series-parallel connection method are as follows:
The lead wire 2' of coil 1 and the lead wire 7' of coil 4 are connected through the series terminal, that is, connect the lead wire 2' and the lead wire 7' are with the two introduction ends 21 of the series terminal respectively, and the series terminal is fixed in the crimp slot 20 of the insulated framework 18, so that coil 1 and coil 4 are connected in series.

Then connect the lead wire 3' of coil 2 and the lead wire 6' of coil 3 through the series terminal, that is, the lead wire 3' and the lead wire 6' are connected to the two introduction ends 21 of the series terminal respectively, and the series terminal is fixed in the crimp slot 20 of the insulated framework 18, so that coil 2 is connected in series with coil 3.

Finally, connect the lead wire 1' of coil 1 and the lead wire 4' of coil 2 through parallel type terminal, that is, the lead wire 1' and the lead wire 4' are connected to the two introduction ends 21 of the parallel type terminal respectively; the lead wire 5' of coil 3 and the lead wire 8' of coil 4 are connected through parallel type terminal, that is, the lead wire 5' and the lead wire 8' are connected to the two introduction ends 21 of the parallel type terminal respectively, so that the coil unit formed by connecting the coil 1 and coil 4 in series is connected in parallel with coil unit formed by connecting coil 2 and coil 3 in series.

The wiring steps of the third series-parallel connection method are as follows: Connect the lead wire 2' of coil 1 and the lead wire 4' of coil 2 through the series connection terminal, that is, connect the lead wire 2' and the lead wire 4'to the two introduction ends 21 of the series connection terminal respectively, and the series connection terminal is fixed in the crimp slot 20 of the insulated framework 18, so that coil 1 is connected in series with coil 2.

Then connect the lead wire 5' of coil 3 and the lead wire 7' of coil 4 through the series terminal, that is, connect the lead wire 5' and the lead wire 7'to the two introduction ends 21 of the series terminal, and the series terminal is fixed in the crimp slot 20 of the insulated framework 18, so that coil 3 is connected in series with coil 4.

Finally, connect the lead wire of coil 1 to the two introduction ends 21 of the series terminal, and the series terminal is fixed in the crimp slot 20 of the insulated framework 18, so that coil 1 is connected in series with coil 2. Finally, connect the lead wire 1' of coil 1 and the lead wire 6' of coil 3 through parallel type terminals, that is, connect the lead wire 1' and the lead wire 6'to the two introduction ends 21 of the parallel type terminal; connect the lead wire 3' of coil 2 to the lead wire 8' of coil 4 through parallel type terminal, that is, connect the lead wire 3' and the lead wire 8'to the two introduction ends 21 of the parallel type terminals, so that the coil unit formed by the series connection of coil 1 and coil 2 is connected in parallel with the coil unit formed by the series connection of coil 3 and coil 4.

After the wiring is completed, the first lead wire I and the second lead wire II at both ends are covered with insulating sleeves to complete the A' phase winding production.

B', C' and D' phase windings are made in the same way as the A' phase windings, so we will not repeat the description here. After the whole bearing winding is completed, each coil is tied with a tie to avoid the enameled wire being exposed, and then the whole radial bearing stator core is dipped in paint and dried.

Based on the same inventive idea, the present application provides a magnetic levitation bearing stator, including the magnetic levitation bearing stator winding.

Based on the same inventive idea, the present application provides a magnetic levitation bearing, including the magnetic levitation bearing stator.

It should be noted that in this document, relationship terms such as "first" and "second" are used only to distinguish one entity or operation from another, and do not necessarily require or imply the existence of any such actual relationship or sequence between these entities or operations. Such an actual relationship or sequence is not necessarily required or implied.

## Claims

1. A magnetic levitation bearing stator winding, **characterized in that**, the magnetic levitation bearing stator winding comprises multiple phase windings; each phase winding comprises at least two coil units connected in parallel with each other, the coil unit comprises one or a plurality of coils;
wherein the magnetic levitation bearing stator winding further comprises an insulating framework (18) and a radial core (17), wherein the insulating framework is mounted on the radial core;
wherein, for each phase winding, all the coils are wound on the corresponding radial core (17) respectively in the same winding direction;
wherein the coils to be connected in series are connected in series in each phase winding, and then each coil units connected in parallel;
wherein, for each phase winding, enameled wires of each coil are reserved as lead wires at each end after each coil has been wound;
wherein, for each phase winding, the lead wires comprise a first lead wire (I) of the outermost coil and a second lead wire of the outermost coil on the other side of the phase winding; and
wherein, for each phase winding, each of the lead wires other than the first lead wire and the second lead wire is covered in insulating sleeves.

2. The magnetic levitation bearing stator winding according to Claim 1, **characterized in that**, when the coil unit comprises a plurality of coils, the plurality of coils are connected in series.

3. The magnetic levitation bearing stator winding according to Claim 2, **characterized in that**, the series connection between the coils and the parallel connection between the coil units are all connected via terminals.

4. The magnetic levitation bearing stator winding according to Claim 3, **characterized in that**, the coils are provided with two lead wires for connection to the terminals.

5. The magnetic levitation bearing stator winding according to Claim 1, **characterized in that**, each phase winding comprises at least four of the coils.

6. The magnetic levitation bearing stator winding according to Claim 1, **characterized in that**, each phase winding comprises the same number of coil units.

7. The magnetic levitation bearing stator winding according to any one of Claims 1 to 6, **characterized in that**, for the same phase winding, the number of coils in the plurality of coil units is the same.

8. A method of making a magnetic levitation bearing stator winding, **characterized in that** the method comprises the steps of:
mounting (S 1) an insulating framework (18) on a radial core (17);
winding (S2) all the coils of a first phase winding on the corresponding radial core (17) respectively;
connecting (S3) in series the coils to be connected in series in the first phase winding, and then connecting each coil units in parallel; and
winding (S4) the other phase windings in sequence according to the winding direction of the first phase winding,
wherein winding all the coils of a first phase winding on the corresponding radial core (17) respectively comprises:
winding all the coils on the corresponding radial core (17) respectively in the same winding direction and reserving enameled wires as lead wires at each end after each coil has been wound;
selecting one lead wire of the outermost coil on one side as the first lead wire (I) of the first phase winding, and selecting one lead wire of the outermost coil on the other side as the second lead wire (II) of the first phase winding; and
covering each of the other lead wires in the first phase winding with insulating sleeves.

9. The method of making the magnetic levitation bearing stator winding according to Claim 8, **characterized in that**, connecting in series the coils to be connected in series in the first phase winding comprises:
selecting all coil units including at least two coils in the first phase winding, and connecting each coil therein in turn through a series type terminal, and then installing the series type terminal in the crimp slot (20) of the corresponding insulating framework (18).

10. The method of making the magnetic levitation bearing stator winding according to Claim 9, **characterized in that**, then connecting each coil units in parallel comprises:
connecting each of the coil units in the first phase winding with a parallel type terminal, and installing the parallel type terminal in the crimp slot (20) of the corresponding insulating framework (18).

11. The method of making the magnetic levitation bearing stator winding according to Claim 9, **characterized in that**, after then connecting each coil units in parallel, further comprises:
covering respectively the first lead wire (I) and the second lead wire (II) of the first phase winding with insulating sleeves.

12. The method of making the magnetic levitation bearing stator winding according to Claim 8, **characterized in that**, winding the other phase windings in sequence according to the winding direction of the first phase winding, further comprises:
tying each of the coils respectively with tying tape, and then dipping and drying the entire stator windings in sequence.

13. A magnetic levitation bearing stator, **characterized in that**, the magnetic levitation bearing stator comprises the magnetic levitation bearing stator winding of any one of Claims 1 to 7.

14. A magnetic levitation bearing, **characterized in that**, the magnetic levitation bearing comprises the magnetic levitation bearing stator of Claim 13.

## Patentansprüche

1. Statorwicklung eines Magnetschwebelagers, **dadurch gekennzeichnet, dass** die Statorwicklung des Magnetschwebelagers eine Vielzahl von Phasenwicklungen umfasst; jede Phasenwicklung mindestens zwei parallel miteinander verbundene Spuleneinheiten umfasst, die Spuleneinheit eine oder eine Vielzahl von Spulen umfasst;
wobei die Statorwicklung des Magnetschwebelagers weiter einen isolierenden Rahmen (18) und einen radialen Kern (17) umfasst, wobei der isolierende Rahmen auf dem radialen Kern angebracht ist;
wobei für jede Phasenwicklung alle Spulen jeweils in der gleichen Wickelrichtung auf den entsprechenden radialen Kern (17) gewickelt sind;
wobei die in Reihe zu schaltenden Spulen in jeder Phasenwicklung in Reihe geschaltet sind und dann die einzelnen Spuleneinheiten parallelgeschaltet sind;
wobei für jede Phasenwicklung nach dem Wickeln jeder Spule lackierte Drähte jeder Spule als Leitungsdrähte an jedem Ende reserviert sind;
wobei die Leitungsdrähte für jede Phasenwicklung einen ersten Anschlussdraht (I) der äußersten Spule und einen zweiten Anschlussdraht der äußersten Spule auf der anderen Seite der Phasenwicklung umfassen; und
wobei für jede Phasenwicklung jeder der Leitungsdrähte mit Ausnahme des ersten Leitungsdrahtes und des zweiten Leitungsdrahtes mit Isolierhülsen ummantelt ist.

2. Statorwicklung eines Magnetschwebelagers nach Anspruch 1, **dadurch gekennzeichnet, dass**, wenn die Spuleneinheit eine Vielzahl von Spulen umfasst, die Vielzahl von Spulen in Reihe geschaltet ist.

3. Statorwicklung eines Magnetschwebelagers nach Anspruch 2, **dadurch gekennzeichnet, dass** die Reihenschaltung zwischen den Spulen und die Parallelschaltung zwischen den Spuleneinheiten alle über Anschlussklemmen verbunden sind.

4. Statorwicklung eines Magnetschwebelagers nach Anspruch 3, **dadurch gekennzeichnet, dass** die Spulen mit zwei Leitungsdrähten zum Anschluss an die Anschlussklemmen versehen sind.

5. Statorwicklung eines Magnetschwebelagers nach Anspruch 1, **dadurch gekennzeichnet, dass** jede Phasenwicklung mindestens vier der Spulen umfasst.

6. Statorwicklung eines Magnetschwebelagers nach Anspruch 1, **dadurch gekennzeichnet, dass** jede Phasenwicklung die gleiche Anzahl von Spuleneinheiten umfasst.

7. Statorwicklung eines Magnetschwebelagers nach einem der Ansprüche 1 bis 6, **dadurch gekennzeichnet, dass** für dieselbe Phasenwicklung die Anzahl von Spulen in der Vielzahl der Spuleneinheiten gleich ist.

8. Verfahren zur Herstellung der Statorwicklung eines Magnetschwebelagers, **dadurch gekennzeichnet, dass** das Verfahren die folgenden Schritte umfasst:
Anbringen (S1) eines isolierenden Rahmens (18) an einem radialen Kern (17);
Wickeln (S2) jeweils aller Spulen einer ersten Phasenwicklung auf dem entsprechenden radialen Kern (17);
Schalten in Reihe (S3) der in der ersten Phasenwicklung in Reihe zu schaltenden Spulen, dann Parallelschalten der einzelnen Spuleneinheiten; und
Wickeln (S4) der anderen Phasenwicklungen nacheinander entsprechend der Wicklungsrichtung der ersten Phasenwicklung,
wobei das Wickeln aller Spulen einer ersten Phasenwicklung auf den entsprechenden radialen Kern (17) jeweils Folgendes umfasst:
Wickeln aller Spulen auf dem entsprechenden radialen Kern (17) jeweils in der gleichen Wickelrichtung und Reservieren von lackierten Drähten als Leitungsdrähte an jedem Ende, nachdem jede Spule gewickelt worden ist;
Auswählen eines Leitungsdrahtes der äußersten Spule auf einer Seite als ersten Leitungsdraht (I) der ersten Phasenwicklung und Auswählen eines Leitungsdrahtes der äußersten Spule auf der anderen Seite als zweiten Leitungsdraht (II) der ersten Phasenwicklung; und
Ummanteln jedes der anderen Leitungsdrähte der ersten Phasenwicklung mit Isolierhülsen.

9. Verfahren zur Herstellung der Statorwicklung eines Magnetschwebelagers nach Anspruch 8, **dadurch gekennzeichnet, dass** die Reihenschaltung der in der ersten Phasenwicklung in Reihe zu schaltenden Spulen Folgendes umfasst:
Auswählen aller Spuleneinheiten, einschließlich von mindestens zwei Spulen in der ersten Phasenwicklung, und wiederum Verbinden jeder Spule darin mittels einer Anschlussklemme vom Reihentyp, und dann Einsetzen der Anschlussklemme vom Reihentyp in den Quetschverbindungsanschluss (20) des entsprechenden isolierenden Rahmens.

10. Verfahren zur Herstellung der Statorwicklung eines Magnetschwebelagers nach Anspruch 9, **dadurch gekennzeichnet, dass** die anschließende Reihenschaltung der einzelnen Spuleneinheiten Folgendes umfasst:
Verbinden jeder der Spuleneinheiten in der ersten Phasenwicklung mit einer Anschlussklemme vom parallelen Typ und Einsetzen der Anschlussklemme vom parallelen Typ in den Quetschverbindungsanschluss (20) des entsprechenden isolierenden Rahmens (18).

11. Verfahren zur Herstellung der Statorwicklung eines Magnetschwebelagers nach Anspruch 9, **dadurch gekennzeichnet, dass** es nach der Parallelschaltung der einzelnen Spuleneinheiten weiter umfasst:
Ummanteln jeweils des ersten Leitungsdrahtes (I) und des zweiten Leitungsdrahtes (II) der ersten Phasenwicklung mit Isolierhülsen.

12. Verfahren zur Herstellung der Statorwicklung eines Magnetschwebelagers nach Anspruch 8, **dadurch gekennzeichnet, dass** das Wickeln der anderen Phasenwicklungen nacheinander entsprechend der Wickelrichtung der ersten Phasenwicklung weiter Folgendes umfasst:
Zusammenbinden jeweils jeder der Spulen mit Klebeband und dann Eintauchen und Trocknen der gesamten Statorwicklungen nacheinander.

13. Stator eines Magnetschwebelagers, **dadurch gekennzeichnet, dass** der Stator des Magnetschwebelagers die Statorwicklung eines Magnetschwebelagers nach einem der Ansprüche 1 bis 7 umfasst.

14. Magnetschwebelager, **dadurch gekennzeichnet, dass** der Stator des Magnetschwebelagers den Stator eines Magnetschwebelagers nach Anspruch 13 umfasst.

## Revendications

1. Enroulement de stator de palier à lévitation magnétique, **caractérisé en ce que** l'enroulement de stator de palier à lévitation magnétique comprend de multiples enroulements de phases ; chaque enroulement de phase comprend au moins deux unités de bobine connectées en parallèle l'une à l'autre, l'unité de bobine comprend une bobine ou une pluralité de bobines ;
dans lequel l'enroulement de stator de palier à lévitation magnétique comprend en outre une structure isolante (18) et un noyau radial (17), dans lequel la structure isolante est montée sur le noyau radial ;
dans lequel, pour chaque enroulement de phase, toutes les bobines sont enroulées sur le noyau radial (17) correspondant respectivement dans la même direction d'enroulement ;
dans lequel les bobines à connecter en série sont connectées en série dans chaque enroulement de phase, et ensuite chaque unité de bobine est connectée en parallèle ;
dans lequel, pour chaque enroulement de phase, des fils émaillés de chaque bobine sont réservés en tant que fils conducteurs à chaque extrémité après que chaque bobine a été enroulée ;
dans lequel, pour chaque enroulement de phase, les fils conducteurs comprennent un premier fil conducteur (I) de la bobine la plus externe et un second fil conducteur de la bobine la plus externe de l'autre côté de l'enroulement de phase ; et
dans lequel, pour chaque enroulement de phase, chacun des fils conducteurs autres que le premier fil conducteur et le second fil conducteur est recouvert de manchons isolants.

2. Enroulement de stator de palier à lévitation magnétique selon la revendication 1, **caractérisé en ce que**, quand l'unité de bobine comprend une pluralité de bobines, la pluralité de bobines sont connectées en série.

3. Enroulement de stator de palier à lévitation magnétique selon la revendication 2, **caractérisé en ce que** la connexion en série entre les bobines et la connexion en parallèle entre les unités de bobine sont toutes connectées par l'intermédiaire de bornes.

4. Enroulement de stator de palier à lévitation magnétique selon la revendication 3, **caractérisé en ce que** les bobines sont pourvues de deux fils conducteurs à des fins de connexion aux bornes.

5. Enroulement de stator de palier à lévitation magnétique selon la revendication 1, **caractérisé en ce que** chaque enroulement de phase comprend au moins quatre des bobines.

6. Enroulement de stator de palier à lévitation magnétique selon la revendication 1, **caractérisé en ce que** chaque enroulement de phase comprend le même nombre d'unités de bobine.

7. Enroulement de stator de palier à lévitation magnétique selon l'une quelconque des revendications 1 à 6, **caractérisé en ce que**, pour le même enroulement de phase, le nombre de bobines dans la pluralité d'unités de bobine est le même.

8. Procédé de fabrication d'un enroulement de stator de palier à lévitation magnétique, **caractérisé en ce que** le procédé comprend les étapes consistant à :
monter (S1) une structure isolante (18) sur un noyau radial (17) ;
enrouler (S2) toutes les bobines d'un premier enroulement de phase sur le noyau radial (17) correspondant respectivement ;
connecter (S3) en série les bobines à connecter en série dans le premier enroulement de phase, et ensuite connecter chaque unité de bobine en parallèle ; et
enrouler (S4) les autres enroulements de phase en séquence selon la direction d'enroulement du premier enroulement de phase,
dans lequel l'enroulement de toutes les bobines d'un premier enroulement de phase sur le noyau radial (17) correspondant respectivement comprend :
l'enroulement de toutes les bobines sur le noyau radial (17) correspondant respectivement dans la même direction d'enroulement et la réservation de fils émaillés en tant que fils conducteurs à chaque extrémité après que chaque bobine a été enroulée ;
la sélection d'un fil conducteur de la bobine la plus externe d'un côté en tant que le premier fil conducteur (I) du premier enroulement de phase, et la sélection d'un fil conducteur de la bobine la plus externe de l'autre côté en tant que le second fil conducteur (II) du premier enroulement de phase ; et
le recouvrement de chacun des autres fils conducteurs du premier enroulement de phase avec des manchons isolants.

9. Procédé de fabrication de l'enroulement de stator de palier à lévitation magnétique selon la revendication 8, **caractérisé en ce que** la connexion en série des bobines à connecter en série dans le premier enroulement de phase comprend :
la sélection de toutes les unités de bobine incluant au moins deux bobines dans le premier enroulement de phase, et la connexion de chaque bobine à l'intérieur une par une par l'intermédiaire d'une borne de type série, et ensuite l'installation de la borne de type série dans la fente de sertissage (20) de la structure isolante (18) correspondante.

10. Procédé de fabrication de l'enroulement de stator de palier à lévitation magnétique selon la revendication 9, **caractérisé en ce que**, ensuite, la connexion de chaque unité de bobine en parallèle comprend :
la connexion de chacune des unités de bobine dans le premier enroulement de phase à une borne de type parallèle, et l'installation de la borne de type parallèle dans la fente de sertissage (20) de la structure isolante (18) correspondante.

11. Procédé de fabrication de l'enroulement de stator de palier à lévitation magnétique selon la revendication 9, **caractérisé en ce que**, après, la connexion de chaque unité de bobine en parallèle comprend en outre :
le recouvrement respectif du premier fil conducteur (I) et du second fil conducteur (II) du premier enroulement de phase avec des manchons isolants.

12. Procédé de fabrication de l'enroulement de stator de palier à lévitation magnétique selon la revendication 8, **caractérisé en ce que** l'enroulement des autres enroulements de phase en séquence selon la direction d'enroulement du premier enroulement de phase comprend en outre :
la liaison de chacune des bobines respectivement avec un ruban de liaison, et ensuite un trempage et un séchage de tous les enroulements de stator en séquence.

13. Stator de palier à lévitation magnétique, **caractérisé en ce que** le stator de palier à lévitation magnétique comprend l'enroulement de stator de palier à lévitation magnétique selon l'une quelconque des revendications 1 à 7.

14. Palier à lévitation magnétique, **caractérisé en ce que** le palier à lévitation magnétique comprend le stator de palier à lévitation magnétique selon la revendication 13.
